# EUROPÄISCHE PATENTSCHRIFT

(11) **EP 4 272 116 B1**
(45) Veröffentlichungstag und Bekanntmachung des Hinweises auf die Patenterteilung: **04.03.2026**
(21) Anmeldenummer: 21851959.3
(22) Anmeldetag: 29.12.2021
(51) Int. Cl.: G06F 18/21, G06V 30/41, G06N 20/00

(54) **VERFAHREN ZUR AUTOMATISCHEN EXTRAKTION VON TEXTINFORMATIONEN AUS BILDDATEIEN**
PROCESS FOR AUTOMATICALLY EXTRACTING TEXT INFORMATION FROM IMAGE FILES
PROCESSUS D'EXTRACTION AUTOMATIQUE D'INFORMATIONS TEXTUELLES DE FICHIERS D'IMAGES

(30) Priorität: 31.12.2020 CH 16892020
(43) Veröffentlichungstag der Anmeldung: 08.11.2023
(73) Patentinhaber: Parashift AG, 4450 Sissach (CH)
(72) Erfinder: BIELER, Andre, 4103 4103 Bottmingen (CH); VEUVE, Alain, 4450 Sissach (CH)
(74) Vertreter: Kieffer, Valentin
(86) Internationale Anmeldenummer: PCT/CH2021/050028
(87) Internationale Veröffentlichungsnummer: WO 2022/140866

(56) Entgegenhaltungen:
- US-A1- 2017 169 103
- US-A1- 2019 179 893
- US-B1- 9 384 264
- MARCEL HANKE ET AL: "Continuous User Feedback Learning for Data Capture from Business Documents", 28 March 2012, HYBRID ARTIFICIAL INTELLIGENT SYSTEMS, SPRINGER BERLIN HEIDELBERG, BERLIN, HEIDELBERG, PAGE(S) 538 - 549, ISBN: 978-3-642-28930-9, XP019174499

## Beschreibung

Die vorliegende Erfindung betrifft ein Verfahren zu automatischer Extraktion von Information aus Dokumentdateien gemäss Oberbegriff des Patentanspruchs 1. Sie fällt in das Gebiet der digitalen Dokumentenbearbeitung und optischen Texterkennung.

Systeme zur Extraktion von Dokumentendaten haben in den letzten 10 Jahren starke Verbesserungen erfahren. Sie dienen dazu jegliche Dokumente, seien dies Papierdokumente, elektronisch generierte oder aber rein elektronische Formate auszulesen und die so gewonnen Daten in eine strukturierte, für weitere Business-Systeme nutzbare Form zu bringen.

Dabei wird versucht aus unstrukturierten oder semiunstrukturierten Daten strukturierte Daten zu erstellen. Dies wird grundsätzlich mit zwei verschiedenen Ansätzen versucht: Template-Ansatz und Freiform Erkennung.

### Template-Ansatz

Beim Template-Ansatz Ansatz wird für jedes Dokumentenlayout ein sogenanntes Template erstellt, welches die Koordinaten der zu suchenden Werte oder vorher definierte Ankerpunkte fix hinterlegt hat und so beim Lesen des Dokuments die Werte entsprechend in die Struktur bringt. Dieses Verfahren funktioniert für sich gut, ist aber aufwändig in der Einrichtung und limitiert damit den Einsatzbereich. Zudem kann der Template-Ansatz mit für das System neuen Layouts nicht umgehen.

### Freiform-Erkennung

Mit der Freiform-Erkennung wird versucht mittels verschiedenen Extraktionsregeln, ohne Templates, Werte von Dokumenten in eine strukturierte Form zu bringen. Dieses Verfahren funktioniert bei einem limitierten Set an Dokumentenvarianten gut, da für jeden Fall eine Regel hinterlegt werden kann. Die Einrichtung der Regeln ist jedoch aufwändig und kann fehlerbehaftet sein. Der Freiform-Erkennungs-Ansatz kann mit neuen Dokumenten besser umgehen als der Template-Ansatz, aber auch hier gilt, dass für neue Dokumentenlayouts meist erheblicher Aufwand für zusätzliche Konfiguration betrieben werden muss. Insbesondere bei Dokumenten mit bisher unbekanntem Informationsgehalt sind derartige Systeme oft überfordert.

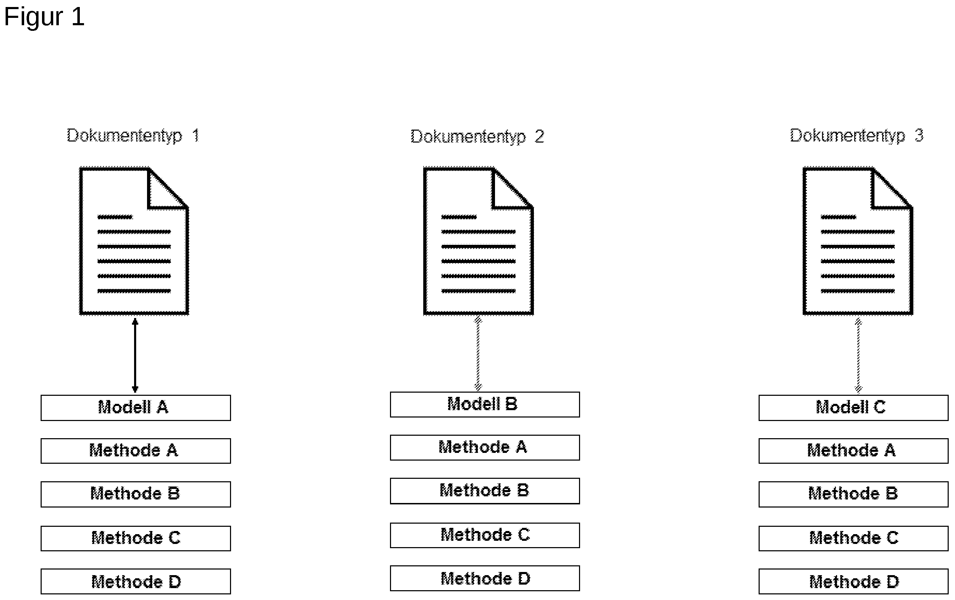

Lernalgorithmen finden in der Dokumentenextraktion bei beiden Ansätzen einen immer verbreiteteren Einsatz, und können insbesondere, wenn Regeln und Templates geschickt eingesetzt und allenfalls kombiniert werden die Ausleseergebnisse markant verbessern. Diese Lernalgorithmen sind jeweils an bestimmte Dokumententypen gebunden/spezialisiert. Dies bedeutet, dass für jeden Dokumententypen im Minimum ein Lernalgorithmus vorhanden sein muss (Fig 1).

Ein möglicher Ansatz ist Mandantenspezifisches Learning. Dabei werden die Lern-Modelle meist universell antrainiert, im eigentlichen Einsatz aber auf den Mandanten beschränkt. Das bedeutet, dass das weitere Learning nur innerhalb des im Mandanten verarbeiteten Dokumentenguts stattfindet. Ist dasselbe System bei verschiedenen Mandanten im Einsatz, findet dasselbe und leicht veränderte Learning parallel statt. Dieses Learning verteuert das Set-Up der Systeme und verlängert die «Time-to-Solution» beim Kunden erheblich.

Stärkere Verbreitung fanden in den letzten Jahren auch pure Machine-Learning Ansätze. Diese versuchen die Dokumentenextraktion mit einer rein datengetriebenen Methodik zu lösen. Diese Systeme werden mit einem Basislearning pro Dokumententyp ausgeliefert und unterliegen denselben Einschränkungen des mandantenspezifischen Learnings wie die Lernsysteme im Template- und Freiform- Ansatz.

US 9,384,264 B1 offenbart einen Machine-Learning basierten Ansatz, mit dem Dokumente klassifiziert werden und Informationen aus Dokumenten extrahiert werden.

Die vorliegende Erfindung stellt sich nunmehr die Aufgabe ein neues Verfahren vorzustellen, welches die bekannten Methoden mittels Attribution der Lernmodelle auf Extraktions-Entitäten (statt Dokumententypen) einsetzt. Es profitieren somit alle Benutzer von kontinuierlichen Verbesserungen der Extraktionsmethoden und -modelle. Die wirtschaftliche Verarbeitung von Kleinstmengen wird so ermöglicht.

Diese Aufgabe löst ein Verfahren mit den Merkmalen des Patentanspruches 1. Weitere Merkmale und Ausführungsbeispiele gehen aus den abhängigen Ansprüchen hervor und deren Vorteile sind in der nachfolgenden Beschreibung erläutert.

### Zeichnungen

- Fig 1: Dokumentenextraktion herkömmlicher Systeme (Stand der Technik)
- Fig 2: Learning pro Extraction-Entity quer durch Dokumententypen
- Fig 3: Dokument Swarm Learning: "Learning Flow"

Die Figuren stellen mögliche Ausführungsbeispiele dar, welche in der nachfolgenden Beschreibung erläutert werden.

### Beschreibung

Das erfindungsgemässe Verfahren sieht folgende Teilverfahren vor:

### Attribution der Lernmodelle auf Extraktions-Entitäten

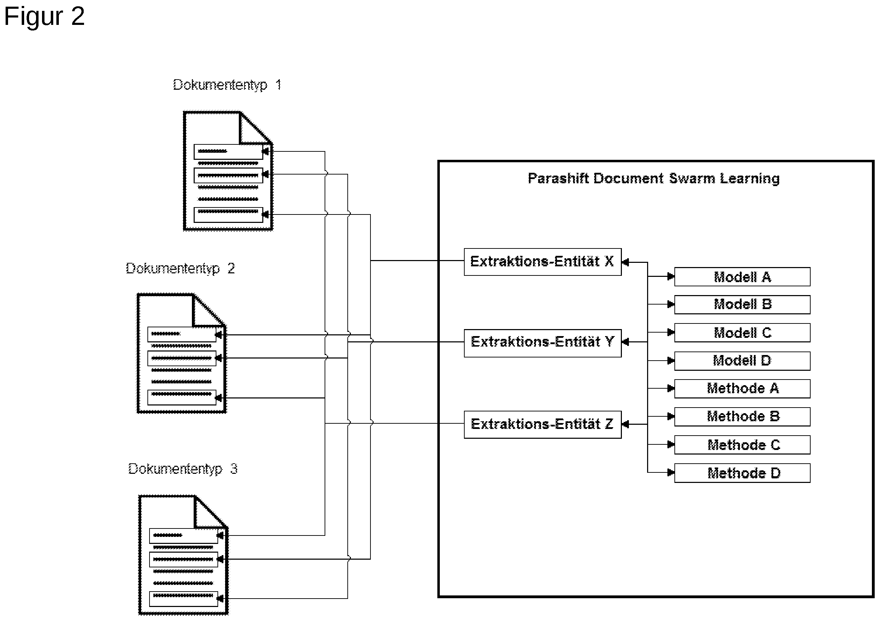

Anstatt die Lernmodelle wie in konventionellen Systemen an Dokumententypen zu binden, teilt das neue Verfahren die Modelle auf Extraktions-Entitäten auf (Abbildung 2). Extraktions-Entitäten repräsentieren einen strukturierten, normalisierten zu findenden Wert. Dies kann in einer Software-Applikation zum Beispiel ein Datenfeld sein. In Fig 2 werden 3 mögliche Entitäten gezeigt, welche in den verschiedenen Dokumententypen an unterschiedlichen Positionen angeordnet sind.

Dieses Verfahren wird unabhängig des eigentlichen Extraktionsansatzes eingesetzt (Vergleiche 2.1 bis 2.4).

Bei diesem Verfahren werden also a) die Extraktions-Entitäten von den Dokumententypen getrennt. b) die Extraktions-Entitäten von den Lernmodellen und Extraktionsmethoden entkoppelt und neu in Beziehung zueinander gesetzt.

Pro Extraktions-Entität können Lernmodelle und Extraktionsmechanismen also in Konkurrenz zueinander gestellt werden. In diesem Fall bildet ein weiteres Modell die Evaluation des jeweils besten Lernmodells und der besten Extraktionsmethode ab.

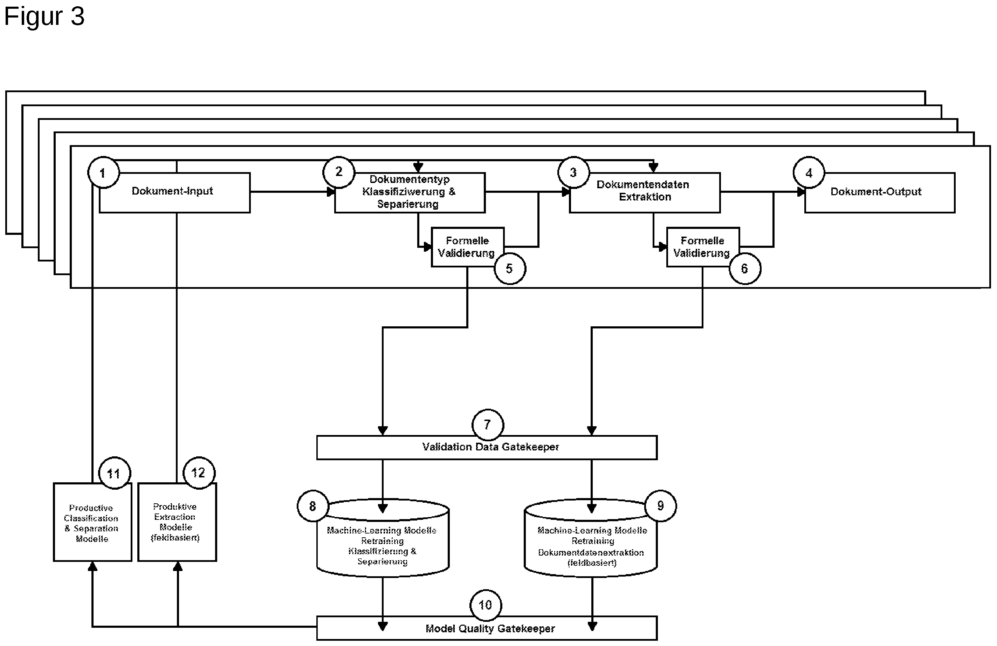

Auf diese Weise ist es möglich, dass Lernmodelle unabhängig vom Dokumententyp verbessert werden können. Diese Verbesserung führt dazu, dass für dieselben Extraktions-Entitäten kein zusätzlicher Lernaufwand für den jeweiligen Mandanten getrieben werden muss. Zudem ermöglicht dieses Verfahren die einfache und zeitlich stark reduzierte Konfiguration von neuen Dokumententypen mit "vorgelernten" Extraktions-Entitäten. Weiter eliminiert das Teilverfahren gegenüber bestehenden Ansätzen Redundanzen beim Antrainieren der Lernmodelle. In Fig 3 wird ein zweites, komplementäres Teilverfahren gezeigt, welches die "Attribution der Lernmodelle auf Extraktions-Entitäten" auf ein Learning im Mandantenverbund appliziert.

Dabei unterhält jeder Mandant im System eine Verarbeitungspipeline für die Dokumente, welche sich über die folgenden 4 Hauptschritte erstreckt:

### 1) Dokument-Input

User laden Dokumente über den Kanal Ihrer Wahl auf die Plattform. Jegliche Kanäle sind für einen Upload denkbar.

### 2) Klassifizierung des Dokumententypes & potenzielle Seitentrennung

Das Dokument wird als ein bestimmter Dokumententyp klassifiziert. Es wird auch eine Dokumententrennung nach Bedarf vorgenommen. Dokumententrennung wird dann notwendig, wenn der User mehrere Dokumente in einem File auf die Plattform hochlädt. Die Dokumentenklassifizierung und Dokumententrennung erfolgt mittels der produktiven Klassifizierungsmodelle (Vergleiche 11).

### 3) Dokumentendaten-Extraktion

Im nächsten Schritt werden die Daten des Dokuments ausgelesen. Die Extraktions-Entitäten sind im Dokumententyp konfiguriert. Die Datenextraktion erfolgt mittels der produktiven Extraktionsmodelle (Vergleiche 12).

### 4) Dokumenten-Output

Nach Abschluss der Dokumentendatenextraktion werden die strukturierten Daten zur Konsumation oder zum Export bereitgestellt.

Die folgenden Zwischenschritte kommen im Ablauf der 4 Hauptschritte jeweils zum Einsatz:

### 5) und 6) Formelle Validierung der Klassifizierungs- und Extraktionsergebnisse

Das Verfahren lässt den User die Klassifizierungs- und Extraktionsergebnisse prüfen und korrigieren. Dabei erfasst der User die zur Verbesserung der Lernmodelle notwendigen Informationen.

### 7) Validation Data Gatekeeper

Der Validation Data Gatekeeper ist eine Komponente, welche die Ergebnisse der formellen Validierung prüft und nach objektiven Gesichtspunkten bewertet. Dies mit dem Ziel, möglichst frühzeitig für das Training nicht hilfreiche Daten zu erkennen und von der weiteren Verarbeitung auszuschliessen.

### 8) und 9) Retraining Machine-Learning Modelle für Klassifizierung und Dokumentdatenextraktion

Mit den durch die fachliche Validierung gewonnenen und durch den Validation Data Gatekeeper geprüften Daten werden die Modelle der Extraktions-Entitäten granular wieder gemäss dem Learning der Extraktions-Entitäten in Fig 2 trainiert.

### 10) Model Quality Gatekeeper

Der Model Quality Gatekeeper ist eine Komponente, welche die Leistungsfähigkeit von trainierten (historischen und konkurrenzierenden) Modellen zueinander in Vergleich setzt. Wird ein oder mehrere Modelle pro Extraktions-Entität als leistungsfähiger bewertet, werden die Modelle in der aktuellen, produktiven Umgebung ersetzt (Vergleiche 11 und 12).

### 11) und 12) Produktive Extraktionsmodelle

Die produktiven Modelle werden laufend zur Extraktion in der Dokumentenverarbeitungs-Pipeline verwendet. Sie bilden die Grundlage für das Auslesen der Dokumentendaten für den Live-Betrieb.

Ein "Schwarm-Effekt" wird erreicht, indem die verbesserten Modelle über sämtliche auf der Plattform befindlichen User geteilt werden. In gleichem Masse fließen sämtliche Daten der formellen Validierung nach der Qualitätsprüfung in die Verbesserung der Lernmodelle. Sämtliche Verbesserungen der Lernmodelle werden wiederum allen Usern auf der Plattform zur Verfügung gestellt. Der gesamte Lernprozess erfolgt vollständig automatisiert.

## Patentansprüche

1. Verfahren zur automatischen Extraktion von Information aus einer Dokumentendatei, wobei die Dokumentendatei mindestens eine Extraktions-Entität im Form eines zu findenden Werts beinhaltet, eine Liste von unterschiedlichen erkennbaren Dokumententypen vorliegt, für jedes Dokumententyp mindestens eine Extraktions-Entität konfiguriert ist, jeder Extraktions-Entität ein spezifisches Extraktionsmodell zugeteilt ist und jedes Extraktionsmodell vom Dokumententyp unabhängig ist, mit den folgenden Verfahrensschritten:
• Erkennung des Dokumententyps der Dokumentendatei mittels eines Klassifizierungsmodells;
• Extraktion der Information, die in der Extraktions-Entität enthalten ist, die in der Dokumentdatei enthalten ist, mittels des spezifischen Extraktionsmodells, das der Extraktions-Entität zugeteilt ist, die für das erkannte Dokumententyp konfiguriert ist,
wobei mindestens zwei unterschiedliche Dokumententype mit mindestens einer identischen Extraktions-Entität mit dem gleichen zugeteilten Extraktionsmodell konfiguriert sind.

2. Verfahren gemäss Anspruch 1, wobei ein Extraktionsmodell aufgrund von Prüfungs- und Korrekturinformationen eines Benutzers durch Machine Learning neu trainiert wird.

3. Verfahren gemäss Anspruch 2 wobei ein Validation Data Gatekeeper die Relevanz der Prüfungs-und Korrekturinformationen des Benutzers für das Machine-Learning-Trainieren bewertet und nicht-relevante Prüfungs-und Korrekturinformationen ausschliesst.

4. Verfahren gemäss Anspruch 2, wobei ein Model Quality Gatekeeper die Leistungsfähigkeit von historischen und konkurrenzierenden trainierten Extraktionsmodellen für eine Extraktions-Entität zueinander vergleicht und der Extraktions-Entität das leistungsfähigste Extraktionsmodell zuteilt.

5. Verfahren gemäss Anspruch 2,
wobei ein Extraktionsmodell aufgrund von Prüfungs- und Korrekturinformationen eines Benutzers im Zusammenhang mit einer Extraktions-Entität eines Dokumententyps neu trainiert wird, und
das neu trainierte Extraktionsmodell im Rahmen der Extraktion von Information aus einer Dokumentendatei eines anderen Benutzers verwendet wird, wobei die Dokumentendatei von einem anderen Dokumententyp ist aber die gleiche Extraktions-Entität beinhaltet.

## Claims

1. A method for automatically extracting information from a document file, wherein the document file contains at least one extraction entity in the form of a value to be found, a list of different recognizable document types is provided, at least one extraction entity is configured for each document type, each extraction entity is assigned a specific extraction model, and each extraction model is independent of the document type, comprising the following steps:
• Recognition of the document type of the document file using a classification model;
• Extraction of the information contained in the extraction entity in the document file using the specific extraction model assigned to the extraction entity configured for the recognized document type,
wherein at least two different document types with at least one identical extraction entity are configured with the same assigned extraction model.

2. The method of claim 1,
wherein
an extraction model is retrained by machine learning based on a user's review and correction information.

3. The method of claim 2,
wherein
a validation data gatekeeper evaluates the relevance of the user's review and correction information for machine learning training and excludes irrelevant review and correction information.

4. The method of claim 2,
wherein
a model quality gatekeeper compares the performance of historical and competing trained extraction models for an extraction entity and assigns the most efficient extraction model to the extraction entity.

5. Method according to claim 2,
wherein
an extraction model is retrained based on review and correction information from a user in connection with an extraction entity of a document type, and
the retrained extraction model is used in the context of extracting information from a document file of another user, wherein the document file is of a different document type but contains the same extraction entity.

## Revendications

1. Procédé d'extraction automatique d'informations à partir d'un fichier, dans lequel le fichier contient au moins une entité d'extraction sous la forme d'une valeur à rechercher, une liste de différents types de fichiers reconnaissables est fournie, au moins une entité d'extraction est configurée pour chaque type de fichier, chaque entité d'extraction se voit attribuer un modèle d'extraction spécifique, et chaque modèle d'extraction est indépendant du type de fichier, comprenant les étapes suivantes :
• Reconnaissance du type de fichier à l'aide d'un modèle de classification ;
• Extraction des informations contenues dans l'entité d'extraction du fichier à l'aide du modèle d'extraction spécifique attribué à l'entité d'extraction configurée pour le type de fichier reconnu,
dans lequel au moins deux types de documents différents avec au moins une entité d'extraction identique sont configurés avec le même modèle d'extraction attribué.

2. Procédé selon la revendication 1,
dans lequel
un modèle d'extraction est réentraîné par apprentissage automatique à partir des informations de révision et de correction d'un utilisateur.

3. Procédé selon la revendication 2,
dans lequel
un contrôleur de données de validation évalue la pertinence des informations de révision et de correction de l'utilisateur pour l'entraînement du modèle d'apprentissage automatique et exclut les informations de révision et de correction non pertinentes.

4. Procédé selon la revendication 2,
dans lequel
un contrôleur de qualité du modèle compare les performances des modèles d'extraction entraînés, historiques et concurrents, pour une entité d'extraction donnée et attribue le modèle d'extraction le plus performant à cette entité.

5. Procédé selon la revendication 2,
dans lequel
un modèle d'extraction est réentraîné à partir des informations de révision et de correction d'un utilisateur relatives à une entité d'extraction d'un type de document donné, et
le modèle d'extraction ainsi entraîné est utilisé pour extraire des informations d'un document d'un autre utilisateur, ce document étant d'un type différent mais contenant la même entité d'extraction.
